# EUROPEAN PATENT SPECIFICATION

(11) **EP 4 651 465 B1**
(45) Date of publication and mention of the grant of the patent: **16.09.2026**
(21) Application number: 24176624.5
(22) Date of filing: 17.05.2024
(51) Int. Cl.: H04L 65/403, H04L 65/611, H04W 72/0446, H04W 72/121, H04W 72/1263, H04L 65/80, H04W 4/80

(54) **WIRELESS DIGITAL AUDIO SYSTEM**
DRAHTLOSES DIGITALES AUDIOSYSTEM
SYSTÈME AUDIO NUMÉRIQUE SANS FIL

(43) Date of publication of application: 19.11.2025
(73) Proprietor: Televic NV., 8870 Izegem (BE); Universiteit Gent, 9000 Gent (BE); Imec VZW, 3001 Leuven (BE)
(72) Inventor: HOEBEKE, Jeroen, 9052 Gent (BE); MOONS, Bart, 9052 Gent (BE); BAERT, Mathias, 9052 Gent (BE)
(74) Representative: Ipsilon Belgium

(56) References cited:
- EP-A1- 4 161 100
- US-A1- 2019 273 531

## Description

### Technical field

The present invention generally relates to scheduling audio streams within a wireless digital audio system comprising a central unit, audio sinks and audio sources.

### Background

A digital audio system provides collection of digital audio streams from audio sources, e.g. microphones, and broadcasting of these audio streams to audio sinks, e.g. loudspeakers or headphones. Such a system can be operated by a central unit that manages the audio streams. The central unit can collect audio streams from the audio sources, select audio streams, combine audio streams, e.g. by mixing them together, and deliver the audio streams to the audio sinks.

In a wireless digital audio system, the audio streams are exchanged wirelessly, i.e. according to a wireless protocol. By enabling wireless communication, audio sinks and audio sources can easily join or leave the audio system. Further, wireless systems provide a shortened installation time due to the omission of an elaborate wiring set-up. Wireless audio systems also allow easy rearrangement of the devices after installation.

Audio systems may be used to provide a particular audio application. One such application is conferencing, where such an audio system is used to control audio streams, e.g. speech, under specific conditions, e.g. related to spatial settings, a large amount of attendants, participants speaking different languages, et cetera. A conferencing system then facilitates communication between participants by equipping speaking persons, i.e. speakers, and listeners with individual loudspeaker devices and/or microphones. Such a conferencing system can, for example, process captured audio signals at a speaking participant and replay them locally at one or more listeners. Conferencing systems may for example be used for lecture halls, debates or presentations in different settings such as parliaments, courtrooms, corporate meeting rooms, academic conferences and the like. A conferencing system typically comprises a central unit which manages the meeting and a number of delegate units which are used by the participants of the meeting. Typically the delegate units are equipped with a microphone and a loudspeaker, next to a headphone connection. As such they can act both as an audio sink and as an audio source. Sometimes a delegate unit acts as a audio sink and as a audio source at the same time. A chairperson unit is a special case of a delegate unit with more features, such as the ability to start or stop a voting session, and to mute other speakers. The central unit manages the audio streams in the system. It is the central unit who assigns an audio channel to a unit who wants to speak. It is also the central unit who makes sure that delegate units who are listening know which channel to listen to. The central unit also manages the audio processing in the system. Typically all listening units play back a mix of the audio streams of the audio sources. This mix can be generated centrally, or can be performed by the audio sinks. The central unit can be a separate device but its functionality can as well be integrated in a delegate unit. A special case of a conferencing system is a mobile system where the participants carry a device which is used to communicate wirelessly with each other. Use cases are for example tour guide systems which allow the audience to ask questions.

An audio system is subject to timing restrictions. In particular, achieving a low latency is paramount. For example, for a speaking person it may be annoying to hear their own voice reproduced through a loudspeaker with a large latency. Latency is also particularly important when a listener can receive sound both via the audio system as well as directly from a speaking person via the air. A large timing difference between these two paths can then be perceived as disturbing. Further, there may not be enough bandwidth available to accommodate for all audio sources simultaneously. Hence, a form of multiplexing or orchestration may be required. Also, audio sources can become active or remain silent, and this can change continuously during use of the audio system. As such, the audio system needs to dynamically adapt the multiplexing. Further, the audio system may require a degree of scalability to accommodate for a varying number of audio sources and audio sinks.

Bluetooth mesh is an example of a wireless protocol that can be used to accommodate a wireless audio system application. It provides a many-to-many mesh network wherein the network nodes function as audio sinks and/or sources, and automatically retransmit received audio streams, also referred to as flooding. A drawback of this protocol is that the flooding mechanism introduces a large and unknown latency. In addition, it only uses a very limited part of the available spectrum such that it is not scalable to a large number of nodes.

A Connected Isochronous Group, CIG, is part of the Bluetooth Low Energy, BLE, protocol that supports one-to-many bidirectional audio streaming between nodes according to a time schedule. In a CIG, the time schedule is organized in uplink-downlink time slot pairs. This means that the central unit has to allocate incoming and outgoing audio streams within this symmetric time schedule. However, incoming and outgoing audio streams are typically asymmetric. For example, a device acting only as an audio sink does not need the assigned uplink time slot. This results in an inefficient use of the available bandwidth. In addition, this limitation hinders the scalability.

US2019/273531 A1 discloses a method for scheduling audio streams within a wireless digital audio system.

### Summary

The present invention aims to alleviate at least some of the above mentioned obstacles.

The scope of protection sought for various embodiments of the invention is set out by the independent claims.

The embodiments and features described in this specification that do not fall within the scope of the independent claims, if any, are to be interpreted as examples useful for understanding various embodiments of the invention.

According to a first aspect, a computer-implemented method is provided for scheduling audio streams within a wireless digital audio system. The wireless digital audio system comprises a central unit, audio sinks and audio sources. The central unit is configured to determine a broadcasting time schedule for isochronous operation of the wireless digital audio system. The broadcasting time schedule comprises consecutive time intervals. A time interval comprises a set of time slots. The method comprises broadcasting, by the central unit, one or more audio streams in one or more time slots of the set of time slots; and delegating, by the central unit, upon request of an audio source, the broadcasting in a subset of the set of time slots to the audio source.

In other words, within each time slot the broadcasting time schedule defines a one-to-many communication between the central unit or audio sources on the one side and the audio sinks on the other side. As such, the broadcasting time schedule is able to provide many-to-many communication over the different time slots. The time schedule is under control of the central unit and defines a time-division multiplexing scheme for the different audio streams. The audio sinks and sources operate isochronously according to the broadcasting time schedule. The operation is isochronous in the sense that all devices in the system keep track of the timing of the time schedule. In other words, the start/end times of a time interval and of the time slots are predefined and known throughout the system.

By centralising the allocation of audio streams at the central unit, the central unit has full control over the audio streams within the audio system. This enables the central unit to provide an efficient operation of the audio system. This also results in a flexible audio system, since the central unit has the power to quickly amend the time schedule depending on the circumstances without further interaction. Further, the autonomy of the central unit ensures that the operation of the system cannot be disturbed by an individual audio source or audio sink.

By delegating the audio broadcasting to selected audio sources, the audio sources can directly reach the audio sinks, other audio sources and the central unit by broadcasting within the digital audio system. An audio source can broadcast an audio stream, i.e. an audio source stream, or other information, for example control information that announces the audio source. An audio source may need to first receive permission for broadcasting from the central unit before being allowed to broadcast during the subset of time slots. Thereby, the central unit is kept in control of the broadcasting. The delegation includes informing the audio source of the subset of time slots.

The delegation upon request ensures that the central unit remains in charge of the operation. The central unit can thereby provide an optimal planning of the time schedule and a maximal use of the available bandwidth can be provided. Further, the central unit can implement the time schedule such that limited or even no broadcasting collisions occur. This further adds to the efficiency of the digital audio system.

Such a request can for example be initiated by pushing, by a user, a request-to-speak button provided on a delegate device. Alternatively, such a request can be for example initiated by a speech detection algorithm, i.e. a computer program running on the delegate device.

A request may or may not be automatically granted by the central unit. For instance, a conferencing system typically has a maximum number of so-called open or active microphones. When this number is reached, the central unit may decide not to grant any new broadcast request. Depending on the system configuration, the central unit may decide to accept new requests after muting one of the open microphones, for instance the one that has been open for the longest time.

Another configuration of a conference system may, for example, use an approval list. When a delegate device makes a request to speak, firstly the request will appear in the approval list. The approval list is typically visible for selected participants, e.g. the operator and the chairperson. Only upon approval of the request by an operator or a chairperson, the request is further handled by the central unit.

By allowing audio sources to broadcast, audio source streams do not need to pass through the central unit before reaching the audio sinks. This results in a reduced latency and an efficient operation of the audio system. In addition, the central unit does not need to spend time on receiving, storing or rebroadcasting the audio source stream but the audio source can stream directly to the audio sinks.

The isochronous time schedule ensures that audio sinks can process received audio streams in the same way irrespective of whether the central unit or an audio source is broadcasting. The audio sinks remain unaware of where an audio stream originates from and therefore do not need to support the delegation. In other words, the audio sinks do not need to be tailored to be operable within the audio system. This allows backward compatibility with existing protocols on the audio sink side.

The above-mentioned advantages combinedly result in a method that is scalable and applicable to audio systems with a plurality of audio sources. The method can provide operation of an audio system with an unlimited number of audio sinks.

According to further example embodiments, the method further comprises broadcasting, by the audio source, an audio source stream in the subset of time slots.

According to further example embodiments, the method further comprises mixing, by the central unit, the audio source stream into the one or more audio streams broadcasted by the central unit.

Mixing is the combining and/or further processing, e.g. filtering, of one or more audio streams before broadcasting them to the audio sinks. For example, streams originating from different audio sources may be mixed into a single audio stream that is then broadcasted to the audio sinks.

By performing the mixing, the central unit can control the audio streams that reach the audio sinks. It gives the central unit the opportunity to perform additional signal processing techniques to enhance the source signals. When mixing streams together, it further reduces the number of parallel audio streams received by the sinks. The central unit can be provided with dedicated input equipment, making it well-suited to perform the mixing.

Alternatively or complementary, mixing may also be performed by the audio sinks. Thereto, an audio sink processes different received audio streams before rendering. This has the advantage that the user of the sink can select what streams are mixed together.

According to further example embodiments, the method further comprises announcing, by the central unit, the audio source stream to the audio sinks in the set of time slots.

By the announcing, the central unit can inform the audio sinks which audio source will be broadcasting during which time slot. This allows the audio sinks autonomy and flexibility over which streams to listen to.

According to further example embodiments, the set of time slots is assigned to frequency channels according to a frequency hopping mechanism.

Frequency hopping, also referred to as frequency hopping spread spectrum, is the altering of the frequency channel, also referred to as carrier frequency, on which to operate, i.e. transmit and receive signals. Frequency hopping may be performed regularly and at periodic intervals, e.g. every time slot. This is performed simultaneously by all participating devices within a system. By the frequency hopping, the probability of interference with disturbers is reduced, thereby increasing the robustness.

According to further example embodiments, the method further comprises allocating, by the central unit, at least one time slot within the set as a control time slot for managing the scheduling by the central unit.

The set of time slots may thus further comprise one or more time slots reserved solely for broadcasting control data within the audio system. The latter are referred to as control time slots. This way, sinks and sources can be informed about the scheduling by only processing these specific control time slots.

According to further example embodiments, the method further comprises receiving, by the central unit, a broadcast request from the audio source.

Requesting a time slot may be done by transmitting, e.g. by broadcasting or via a different communication channel, by the audio source, a broadcast request to the central unit.

According to further example embodiments, the method further comprises allocating, by the central unit, one or more of the control time slots as request time slot for the receiving of broadcast requests.

A request time slot is a control time slot that is specifically reserved for listening, by the central unit, to broadcast requests sent by audio sources wishing to broadcast an audio stream. Multiple audio sources may be allowed to send a broadcast request within a request time slot. The central unit only needs to listen for requests during the known request time slot. This allows the central unit to handle other tasks outside of the request time slot. In addition, broadcast requests are only sent during the request time slots such that they do not interfere with broadcasting of audio streams.

According to further example embodiments, the broadcast request is received outside the time slots of the broadcasting time schedule.

For example, the time schedule may not be filled completely, leaving gaps that can be used for sending and receiving a broadcast request. By receiving broadcast requests outside the time slots, more time slots remain available for the broadcasting of streams. Also, the receiving of broadcast requests can be done more flexibly, e.g. during time periods of adaptable length and/or depending on the available space in the time schedule.

As another example, the broadcast request may be sent and received via an alternative communication channel separate from the one used for the wireless audio system. In such a case, the broadcast request may not be received in accordance with the broadcasting time schedule. This frees up more space in the time schedule for other purposes, such as broadcasting of streams.

According to further example embodiments, the method further comprises allocating, by the central unit, one or more of the control time slots as a request announcement time slot comprising an identification of one or more consecutive time slots as request time slot.

During the request announcement time slot, the central unit announces the upcoming request time slot(s) to the audio sources. During those following time slots, the central unit may receive a broadcast request from one or more of the audio sources. Upon receiving a broadcast request, the central unit can further broadcast an approval message indicating the delegated time slot(s). The consecutive request time slot(s) may, but do not need to, immediately succeed the request announcement time slot.

The identification may comprise an identification to the time slot in which the request may be broadcasted by the audio sources. The announcement time slot implements active scanning, allowing audio sources to scan for announcements of the central unit and respond to it during a consecutive time slot. Active scanning can be performed efficiently as it is supported by existing protocols, e.g. Bluetooth Low Energy.

According to further example embodiments, the method further comprises allocating, by the central unit, one or more response time slots for confirming delegation of the subset of time slots to the audio source.

The central unit needs to inform the audio source of which time slots are being delegated in response of the request by the audio source. This may be done by scheduling a response time slot within the time schedule, during which the central unit broadcasts the subset to the audio source. The central unit may, for example, include an audio source identifier to indicate that the communicated subset is intended for the audio source.

According to further example embodiments, the method may further comprise allocating, by the central unit, one or more response time slots consecutive to the identified one or more request time slots for confirming delegation of the subset of time slots to the audio source; wherein the one or more request time slots are identified with an identifier during a request announcement time slot. As such, a sequence of a request announcement time slot, a request time slot and a response time slot can be used to handle the delegation. The consecutive response time slot(s) may, but do not need to, immediately succeed a request time slot.

According to further example embodiments, the method comprises instructing, by the central unit, the audio source to cease the broadcasting.

The central unit manages all communication and can provide a command to an audio source to stop broadcasting. Upon instructing the audio source to cease the broadcasting, the central unit may release the corresponding time slot. Thereafter, the central unit can reserve the corresponding time slot for another purpose, e.g. for broadcasting by the central unit, for broadcasting by another audio source, or as a control time slot. This may save bandwidth and adds to the efficiency of the operation of the audio system. The command may, for example, be initiated by a chairperson in a conferencing system that wants to mute one or more delegates. The central unit can then instruct an audio source to stop transmitting. To this purpose, the chairperson has a chairperson unit that is configured to issue such commands to the central unit. As a result, the chairperson or another person managing the meeting can remotely turn of the microphone of the persons that need to be muted such that the audio source device will stop transmitting.

According to further example embodiments, the instructing is further performed upon reaching a predetermined timeout value since a last broadcasting of the audio source.

The central unit may determine that a time slot should be freed after it is unused during a predetermined number of time intervals. As such, an audio source can communicate to the central unit that it no longer needs the time slot simply by ceasing broadcasting. Advantageously, no communication is then needed to inform the central unit that the time slot may be released, thereby saving bandwidth. By instructing the release of a time slot, it can be ensured that an audio source does not restart broadcasting without supervision by the central unit after a period of silence.

According to further example embodiments, the method further comprises receiving, by the central unit, a release request from the audio source to cease the broadcasting, and the method further comprises releasing, by the central unit, the subset based on the release request.

Such a release request can for example be provided by a mute button provided on the delegate device. A user can then press or release the button to mute his microphone which may initiate termination of the underlying delegation.

Alternatively, or additionally to the freeing up of the time slot upon a timeout, audio sources may be configured to transmit, e.g. broadcast, a release request to the central unit. By sending the release request, the audio source explicitly informs the central unit that it will no longer use the time slot, e.g. starting from a specified number of time intervals. This has the advantage that lost time slots are avoided.

According to further example embodiments, the wireless digital audio system further comprises a second central unit and a second set of audio sources operable according to a second time schedule having a second set of time slots synchronous with the set of time slots. The method further comprises delegating, by the second central unit, upon request of an audio source of the second set, the broadcasting in a subset of the second set of time slots to the audio source; broadcasting, by the audio source of the second set, a second audio source stream in the subset of the second set of time slots; providing the second audio source stream to the first central unit; and, by the central unit, including the second audio source stream in the broadcasted one or more audio streams.

By providing a second central unit, more audio sources, i.e. the second audio sources, can be additionally serviced. The second time schedule may be a broadcasting time schedule. The cooperation of multiple central units allows an increased number of simultaneous audio streams in the audio system, since each central unit can handle a maximum number of simultaneous audio streams as determined by the number of time slots. As such, the method achieves a further increase in scalability.

According to further example embodiments, the scheduling is performed according to a Bluetooth Low Energy, BLE, protocol by implementing a Broadcast Isochronous Group, BIG, wherein the central unit acts as central and wherein the audio sinks and audio sources act as peripheral.

The delegating is compatible with BIG in the sense that devices that do not broadcast delegated audio streams can still operate when they are BIG capable. For example, any audio sink that supports BIG can receive audio streams, both from the central unit and audio sources.

According to a second aspect, there is provided a central unit for a wireless audio system. The central unit is configured to determine a broadcasting time schedule for isochronous operation of the wireless audio system, wherein the broadcasting time schedule comprises consecutive time intervals and wherein a time interval comprises a set of time slots. The central unit is further configured to broadcast one or more audio streams in the set of time slots; and to delegate, upon request of an audio source of the wireless audio system, the broadcasting in a subset of the set of time slots to the audio source.

According to a third aspect, there is provided an audio source for a wireless audio system comprising a central unit according to the second aspect. The audio source is further configured to request the broadcasting to the central unit, to receive the delegation to broadcast in the subset of the set of time slots, and to broadcast an audio source stream in the subset of the set of time slots.

According to a fourth aspect, there is provided a wireless audio system comprising a central unit according to the second aspect and a plurality of audio sources according to the third aspect. Such a wireless audio system may provide one or more of the above-mentioned advantages.

According to a fifth aspect, a computer program product is provided comprising computer-executable instructions for performing the steps according to the first aspect when the program is run on a computer.

According to a sixth aspect, a computer readable storage medium is provided comprising computer-executable instructions for performing the steps according to the first aspect when the program is run on a computer.

### Brief Description of the Drawings

Fig. 1 shows a method for scheduling audio streams within a wireless audio system according to example embodiments;
Fig. 2 shows a method for scheduling audio streams within a wireless audio system according to example embodiments;
Fig. 3 shows a broadcasting time schedule according to example embodiments;
Fig. 4 shows a broadcasting time schedule and a frequency hopping mechanism according to example embodiments;
Fig. 5 shows a broadcasting time schedule according to example embodiments;
Fig. 6 shows a request time slot according to example embodiments;
Fig. 7 shows a request announcement time slot according to example embodiments;
Fig. 8 shows a wireless audio system having a second time schedule according to example embodiments; and
Fig. 9 shows as example embodiment of a suitable computing system for performing one or several steps in embodiments of the invention.

### Detailed Description of Embodiment(s)

Example embodiments of the present disclosure relates to wireless digital audio systems. A wireless digital audio system, further also referred to as audio system, comprises a central unit and a plurality of peripheral devices, also referred to as audio devices or delegate units. A peripheral device may operate as an audio source, an audio sink, or both. A peripheral device is defined as an audio source when it is capable of generating an audio stream and broadcasting it wirelessly for use in the audio system. A peripheral device is defined as an audio sink when it is capable of wirelessly receiving one or more broadcasted audio streams and play back one or more of these received audio streams such that the streams can be listened to by a user of the peripheral device.

According to example embodiments, the central unit schedules the audio streams. This scheduling comprises controlling which audio source can wirelessly broadcast an audio stream and the broadcasting, by the central unit, of one or more audio streams for reception by the audio sinks. The broadcasted streams may originate from an audio source in the wireless audio system or from external audio sources that provide further audio streams to the central unit. Different audio streams may be broadcasted within the audio system according to a time schedule that is under control of the central unit. The time schedule is defined by a sequence of consecutive time intervals, each comprising a set of time slots. Different audio streams may be allocated to the different time slots, thereby achieving a time division multiplexing, TDM, mechanism for broadcasting different audio streams. The audio system operates isochronously, i.e. the audio sources, sinks and central unit are synchronized with the time schedule as defined by the central unit. The time schedule is further defined as a broadcasting time schedule, i.e. the data transmitted within the time slots may be received by all peripheral devices within reach of the central unit. According to the broadcasting schedule, the central unit can broadcast one or more audio streams in one or more time slots of the set of time slots which can then be received by all audio sinks. The broadcasting can thereby be defined as a one-to-many communication from the central unit to the audio sinks. Besides the broadcasting by the central unit, the audio system also supports broadcasting by audio sources in dedicated time slots while the central unit stays in control of the time schedule. To achieve this, the central unit delegates, upon request of an audio source, the broadcasting in a subset of the set of time slots to the audio source.

An audio stream may be defined as a sequence of digital data that encodes audio that may be converted to an audible audio signal. When broadcasted, the audio stream is divided over the allocated time slots. When received by an audio sink, the audio stream is reassembled by selecting and concatenating the data from the time slots associated with the audio stream. Audio streams can be encoded, i.e. compressed, by the central unit or audio source before broadcasting. Accordingly, the encoded audio streams can be decoded by the audio sinks before rendering. By the compression, applying an audio codec reduces the amount of bits to be transmitted over the wireless medium and provides a more efficient communication within the audio system. For example, the Low Complexity Communication Codec, LC3, as defined under BLE can be applied.

According to example embodiments, a peripheral device that operates as an audio sink is at least configured to receive one or more broadcasted audio streams according to the time schedule. A peripheral device advantageously comprises circuitry for further playback of the broadcasted audio streams. Such a circuitry may for example comprise one or more loudspeakers. The peripheral device may also comprise circuitry that allows mixing or selecting of the received audio streams. Such mixing or selecting may be operable by a user of the peripheral device.

According to example embodiments, a peripheral device that operates as an audio source is at least configured to request the central unit for broadcasting of an audio stream, and, thereupon, broadcast an audio stream within the time slots that were delegated by the central unit to the audio source. Such a peripheral device advantageously comprises circuitry for generating the audio stream. Such circuitry may for example comprise one or more microphones.

Example audio devices are smartphones, laptops, and tablets. Example audio devices may also be headsets in combination with the latter. A peripheral device may also be a dedicated device for use in the audio system. One example is a conferencing device that can be placed or installed on a stand or table in front of a user. The conferencing device comprises a microphone, typically flexibly extending towards the user. The device is then configured to operate as an audio source within the audio system by recording, i.e. audio capturing, when the user is speaking, encoding the captured data in an audio stream, and broadcasting this audio stream. The device may further comprise inputs to operate the device, e.g. a button to activate the speaker. A conferencing device typically operates as an audio sink too. To this purpose it may comprise a loudspeaker or an input for connecting with a headphone or headset.

Wireless digital audio systems may be used within a conferencing system. A conferencing system facilitates multiple speakers, possibly with simultaneous translation, a large number of participants, and control over which speakers the attendants can hear. Some attendants may be equipped with a conferencing device. The device may allow the attendant to listen to the active speaker or a translation thereof by selecting the appropriate audio stream. The device may also allow the attendant to capture an audio stream that is then streamed to the other attendants, translators, and/or the central unit. Also interpreters may be equipped with such a device allowing them to hear audio streams from specific participants and provide a translation of the stream. Other attendants may be equipped with only audio sinks such that they can only play back the audio streams but not participate in a discussion. The central unit in a conferencing system is responsible for scheduling the different audio streams. The central unit may for example control audio sources and sinks, mix different audio streams together, broadcast a mixed audio stream to the audio sinks, provide certain audio streams upon request to the audio sinks, add new devices to the audio system etc. For large-scale events, the conferencing audio system may need to be able to handle a large number of devices, for example dozens of audio sources and hundreds of audio sinks. Optionally, audio sources and sinks can join and leave the system during operation. Optionally, audio sources and/or audio sinks may be allowed to provide feedback data, e.g. for voting purposes, to raise their hand, or to ask a question, requiring the system to be flexible.

According to example embodiments, the time schedule may be defined according to a broadcasting protocol. One example protocol is the Bluetooth Low Energy, BLE, protocol that defines a Broadcast Isochronous Group, BIG, and corresponding Broadcast Isochronous Streams, BISs. The central unit then acts as the central and the audio sinks act as peripheral wherein the terms 'central' and 'peripheral' are defined by the protocol.

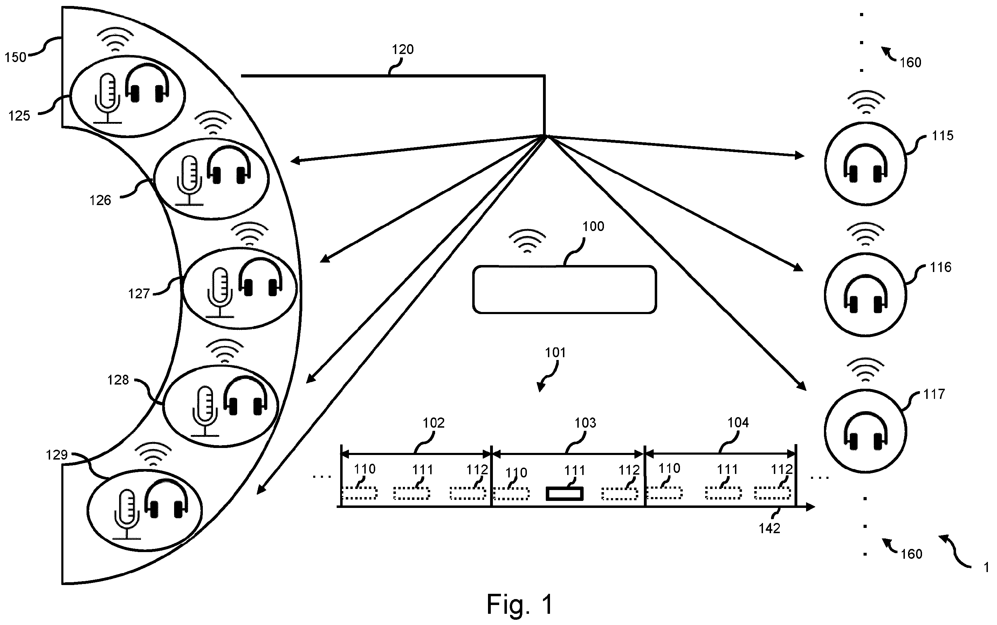

In Figure 1, a wireless digital audio system 1 according to an example embodiment is illustrated. The system 1 is embodied as a conferencing system for facilitating a debate. Panel speakers, i.e. delegates, participating in the debate as well as a chairperson may be seated around a table 150 equipped with respective conferencing devices 125-129 operating as both audio source and sink within the system 1. For example, conferencing devices 125, 126, 128, 129 may be delegate units and conferencing device 127 may be a chairman unit. The debate is wirelessly broadcasted to attendants of the debate. Attendants are equipped with respective headphones 115-117 operating as audio sinks. Only three listeners 115-117 are illustrated in Figure 1 for simplicity. Many more listeners may be part of the audio system 1 as indicated by dots 160.

The system 1 may be operable as a BLE-defined BIG. The audio sources and audio sinks act as peripherals and a central unit 100 acts as central. As such, the audio system 1 operates isochronously. BISs may be set up between the central 100 and peripherals 115-117, 125-129. Figure 1 shows a monaural audio source stream 120 that is broadcasted by conferencing device 125. Stream 120 may take the form of a Broadcast Isochronous Stream, BIS. Alternatively, two audio streams may be broadcasted to provide binaural or stereo audio. According to example embodiments, the central unit 100 collects audio streams from the devices 125-129 and broadcasts a mixed audio stream for the audio sinks 115-117.

The central unit 100 schedules the broadcasting according to broadcasting time schedule 101 as a function of time 142. The broadcasting time schedule 101 comprises repeated subsequent time intervals 102, 103, 104. Time intervals 102, 103, 104 each comprises the same set of time slots 110, 111, 112. The set of time slots 110, 111, 112 remains the same until amended by the central unit 100. The central unit 100 may broadcast one or more audio streams, for example in time slots 110, 112. Time slot 111 is, for example, delegated to audio source 125. This means that the central 100 has in advance received a broadcast request from source 125 and has reserved the time slot 111 for broadcasting by the audio source 125. During time slot 111, the right to broadcast is thereby exclusively assigned to audio source 125. Thereupon, audio source 125 broadcasts the audio source stream 120 during time slot 111. Figure 1 illustrates the audio system 1 during time slot 111 of time interval 103 when audio source 125 is broadcasting audio stream 120. Time slot 111 remains delegated to audio source 125 until released by the central unit 100.

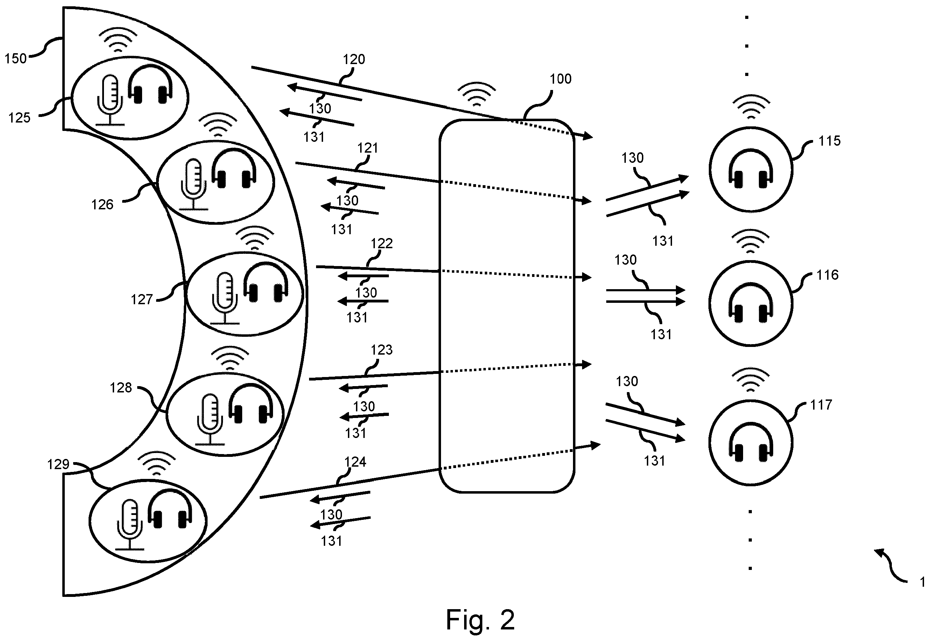

Figure 2 shows wireless audio system 1 comprising the same devices as shown in Figure 1 but further showing the different broadcasted audio streams supported by the system 1. These streams may for example correspond to BISs.

The central unit 100 can broadcast audio streams 130, 131. Audio streams 130, 131 may together form a binaural audio stream. Upon broadcasting by the central unit 100, the audio streams 130, 131 reach both the listeners via audio sinks 115-117 as well as the debate speakers through audio sinks 125-129 when they also operate as audio sinks. The audio sinks 115-117, 125-129 play back the audio streams 130,131 to the users.

The audio sources 125, 126, 127, 128, 129 are capable of broadcasting respective audio source streams 120, 121, 122, 123, 124, e.g., BISs, upon request and under delegation of central unit 100. As audio source streams 120, 121, 122, 123, 124 are also broadcast streams, they may be received by the central unit 100 and any audio sink.

According to example embodiments, the central unit 100 is configured to announce an audio source stream 120-124 directly to the audio sinks 115-117 within the set of time slots. For example, the central unit 100 may announce the time slot(s) during which audio source stream 124, i.e. the broadcasted stream that originates from audio source 129, will be broadcasted. In that case, the audio sinks can identify the audio source stream 124 and directly render the received audio data. By this scheme, time delays within the audio system 1 are greatly reduced because the source audio streams can be directly broadcasted to the audio sinks.

According to example embodiments, the central unit 100 is configured to mix the audio source streams 120-124 into one or more audio streams broadcasted by the central unit itself, e.g. streams 130, 131. The central unit 100 can include more than one of the audio source streams in the output stream 130, 131. In this case, the audio sinks only play back the audio streams 130, 131 and ignore the separate audio source streams 120-124.

According to example embodiments, the central unit is further configured to provide a discovery mechanism to set up the wireless audio system. New devices may then listen to discovery messages broadcasted by the central unit. The central unit may also be configured to continue providing discovery during operation of the wireless audio system, i.e. during the broadcasting according to the time schedule. For example, a discovery scheme can be provided by periodically broadcasting BLE advertisements by the central unit. The discovery can be provided in addition to the time schedule, e.g. during gaps in the time schedule. Audio sources wishing to join the audio system 1 can discover the central unit 100 by analysing the discovery message. The central unit 100 may, for example, broadcast the discovery message in the so-called primary frequency channels, i.e. channels 37, 38, 39, as defined in Bluetooth Low Energy. Prospective devices can scan these channels to discover the central unit 100.

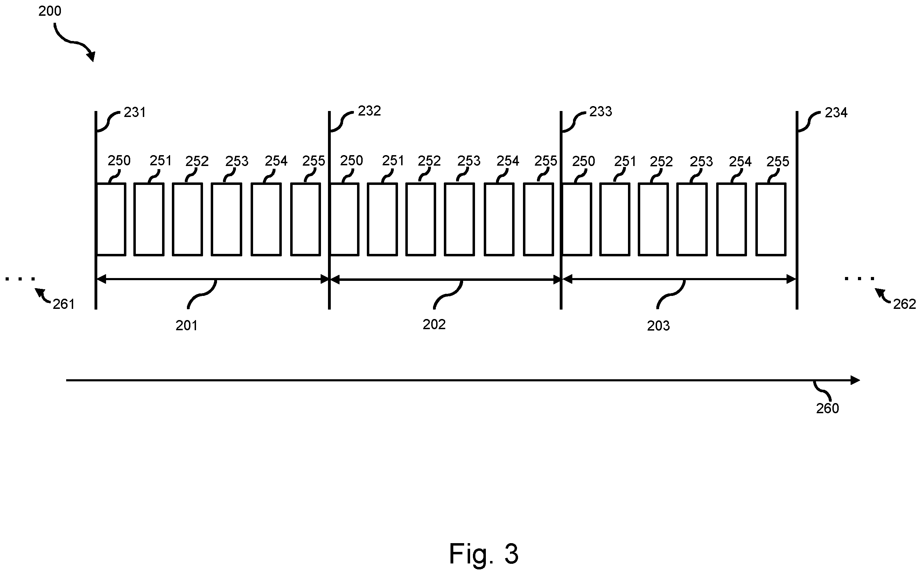

In Figure 3, a broadcasting time schedule 200 as a function of time 260 is illustrated according to an example embodiment. The broadcasting time schedule 200 comprises a plurality of consecutive time intervals of which three consecutive time intervals 201, 202, 203 are shown. Time interval 201 starts at time 231 and ends at time 232. Time interval 202 starts at time 232 and ends at time 233. Time interval 203 starts at time 233 and ends at time 234. Dots 261 represent previous time intervals of the schedule 200, i.e. time intervals occurring before interval 201. Dots 262 represent future time intervals of the schedule 200, i.e. time intervals occurring after interval 203. The schedule 200 is repetitive, i.e. consecutive time intervals are equally long and have the same time slots, until the central unit 100 modifies the schedule 200. The time intervals each comprise the same set of time slots 250, 251, 252, 253, 254, 255 until updated by the central unit 100. A time slot can be defined by its start and end time within the time interval, and function or purpose as assigned by the central unit. The central unit 100 may, for example, reserve time slots for broadcasting of an audio stream by the central unit 100 itself. The central unit 100 may, for example, reserve time slots for broadcasting an audio stream by an appointed audio source. The central unit 100 may, for example, reserve time slots for broadcasting, by the central unit 100, control data within the audio system 1. The central unit 100 may reassign a function or purpose of a time slot. The central unit 100 may change the duration, and hence start time and/or end time, of one or more of the time slots. Such updating of the time schedule 200 may, for example, be performed as a function of broadcasting requests of the audio sources.

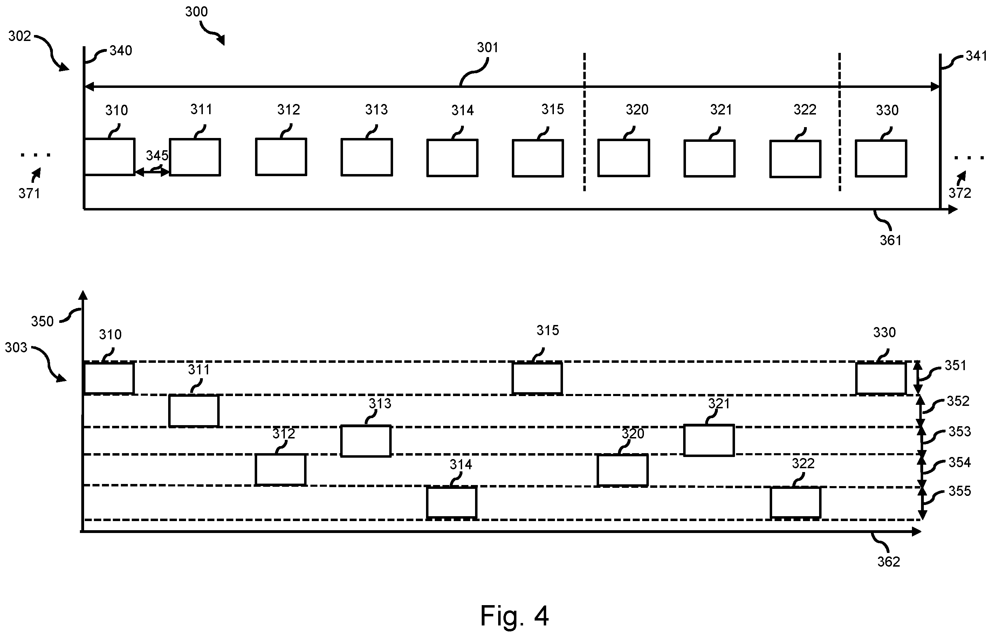

Figure 4 shows a first subplot 302 with a time schedule 300 according to an example embodiment. The time schedule 300 comprises a plurality of time intervals, of which time interval 301 is shown. Time intervals before and after time interval 301 are respectively indicated by dots 371 and dots 372. Time axis 361 is depicted along with time schedule 300. Time interval 301 starts at time 340 and ends at time 341. Time interval 301 comprises a set of time slots 310, 311, 312, 313, 314, 315, 320, 321, 322, 330.

The central unit 100 may assign a specific function or purpose to each time slot. As an example, the central unit 100 has assigned slots 310-315 for broadcasting audio data. Slots 310-313 are assigned for broadcasting by central unit 100; time slot 314 is assigned for broadcasting by an audio source, e.g. audio source 125; and time slot 315 is assigned for broadcasting by another audio source, e.g. audio source 129. As an example, the central unit 100 may provide interpreted audio streams in slots 310-313. Further, the central unit 100 has assigned slots 320, 321, 322, 330 for broadcasting of control data by the central unit 100. The time slots 320, 321, 322, 330 are further also referred to as control time slots 320, 321, 322, 330. The central unit 100 manages the audio system, e.g. as a BIG, and may broadcast control data within the audio system 1. Control data may comprise updates of broadcasting frequency or updates of the time schedule 300. A control time slot can, for example, also be used to instruct, by the central unit 100, a broadcasting audio source to cease broadcasting. The central unit 100 may, for example, decide to do so upon reaching a predetermined timeout value since a last broadcasting of the audio source. The central unit 100 can further allocate one or more of the control time slots 320, 321, 322, 330 as request time slot for the receiving of broadcast requests from audio sources. For example, time slots 320, 321, 322 may serve as request time slots during which audio sources are allowed to request for broadcasting. Time slot 330 may be reserved for other control data. Further, an inter-slot time distance 345 can be defined by the central unit. The time 345 between two time slots may for example be set to zero, or, a non-zero margin 345 may be provided for increased robustness of the operation of system 1.

In Figure 4, subplot 303 further illustrates a frequency hopping mechanism for the time schedule 300. Axis 362 is a time axis coinciding with time axis 361. Axis 350 represents frequency. A number of frequency channels 351, 352, 353, 354, 355 are shown, each taking up a section of the frequency spectrum. In practice, many more frequency channels may be used. For example, using Bluetooth Low Energy, 40 channels are defined having a channel width of 2MHz in the 2.400 - 2.4835 GHz Industrial, Scientific and Medical, ISM, band. Subplot 303 shows how each time slot of the time schedule 300 is transmitted over a different frequency channel. As such, the set of time slots 310-315, 320-322, 330 is assigned to frequency channels 351-355 according to the frequency hopping mechanism. For example, as shown in subplot 303, during time slot 310 broadcasting is performed over channel 351; during time slot 311 broadcasting is performed over channel 352; during time slot 312 broadcasting is performed over channel 354; during time slot 313 broadcasting is performed over channel 353 and so on. By switching channel in every new time slot, the probability of collisions with other users of the spectrum is reduced. The devices of the audio system deploy the same channel selection algorithm to determine which channel to communicate over in a certain time slot. The devices of the audio system may keep track of possible channels that are not to be used, e.g. by keeping a list which may also be referred to as a channel map. The central unit may regularly update the channel map, e.g. to prevent the system from operating in overcrowded frequency channels. By regularly updating the channel map, the central unit provides an adaptive frequency hopping mechanism. The central unit is configured to provide the other devices of the audio system with information necessary to participate in the frequency hopping mechanism. The central unit may, for example, do so by broadcasting such information during one or more control time slots.

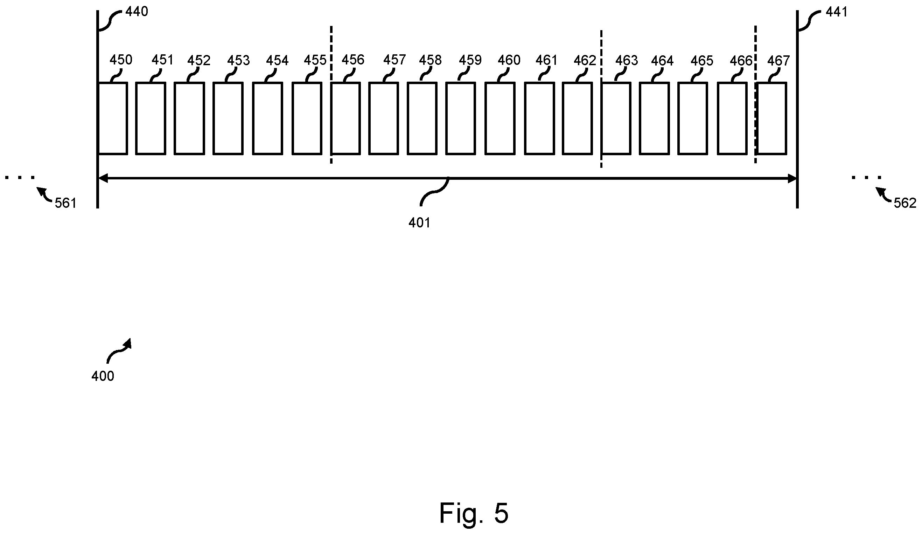

Figure 5 shows a broadcasting time schedule 400 according to an example embodiment. The time schedule 400 comprises consecutive intervals of which interval 401 is shown. Previous and future time intervals are indicated by dots 561 and 562 respectively. Time interval 401 starts at time 440 and ends at time 441. Time interval 401 has time slots 450-467. The central unit 100 provides the time schedule 400 and allocates a purpose to each of the time slots 450-467.

Time slots 450-462 are reserved for broadcasting audio data, while time slots 463-467 are reserved as control time slots. Time slots 450-455 are the audio data time slots reserved for the central unit 100, i.e. for broadcasting audio streams by the central unit, e.g. the original mix of audio streams or translated versions thereof. Time slots 456-462 are audio data time slots reserved for broadcasting by the audio sources. During the time slots 456-462, audio sources 125-129 are allowed to broadcast audio source streams upon request. For example, time slots 456, 459, 462 may be reserved for audio source 125; time slots 457, 460 may be reserved for audio source 126; and time slots 458, 461 may be reserved for audio source 127. Alternatively, for example when implementing a BIG in BLE, time slots can be assigned in pairs. Also, more than two consecutive time slots can be collectively assigned to a single audio source.

According to example embodiments, time slots 463-466 are request time slots. During the time slots 463-466, audio sources 125-129 are allowed to broadcast a request for broadcasting a source audio stream. A random one of the request time slots may be used by each audio source to prevent requests from different audio sources within the same time slot. For example, a random natural number from zero to three may be used to determine, by an audio source, in which of the time slots 463-466 to send a request. For example, audio source 128 may use time slot 464 to broadcast a request to let central unit 100 know it has audio stream data to broadcast to audio sinks within the audio system 1. In this case, one is the randomly selected natural number. Time slot 467 is a final control slot that may be used by the central unit 100 to broadcast information related to the operation of the time schedule, e.g. the channel map for the frequency hopping.

According to example embodiments, some of the control time slots of the time schedule 400 may be dedicated to a different purpose. For example, time slot 464 can be allocated by the central unit 100 as request announcement time slot. During the request announcement time slot 464, the central unit 100 broadcasts a request announcement message. The announcement message comprises an identification of a consecutive time slot, e.g. time slot 465. Upon receiving the request announcement message, the audio sources know that they are allowed to transmit a broadcasting request to the central unit during the request time slot 465. Further, time slot 466 can be allocated by the central unit as a response time slot for confirming delegation of time slots to the audio sources. This can be implemented using active scanning, for example as provided by BLE. To this end, advertising can be performed by the central unit during time slot 464. During time slot 465, the audio sources can then send a broadcast request in the form of a scan request as defined by BLE. Subsequent to receiving the scan request, the central unit then responds with a scan response as defined by BLE, in response time slot 466.

It is noted that in the time schedule 400, the central unit 100 can allocate audio stream time slots and control time slots in any order. They may be grouped as illustrated throughout the figures, yet they may also be interleaved within the time schedule. Additionally, the time slots do not need to have the same duration. For example, certain control time slots can be advantageously implemented as shorter time slots. As an example, a control time slot may be provided during the inter-time slot interval 345 between two audio stream time slots or otherwise. Further, the duration of the consecutive time intervals 401 may be varied by the central unit 100 based on the number of audio sources, the number of translation streams provided, and/or other parameters of the audio system 1.

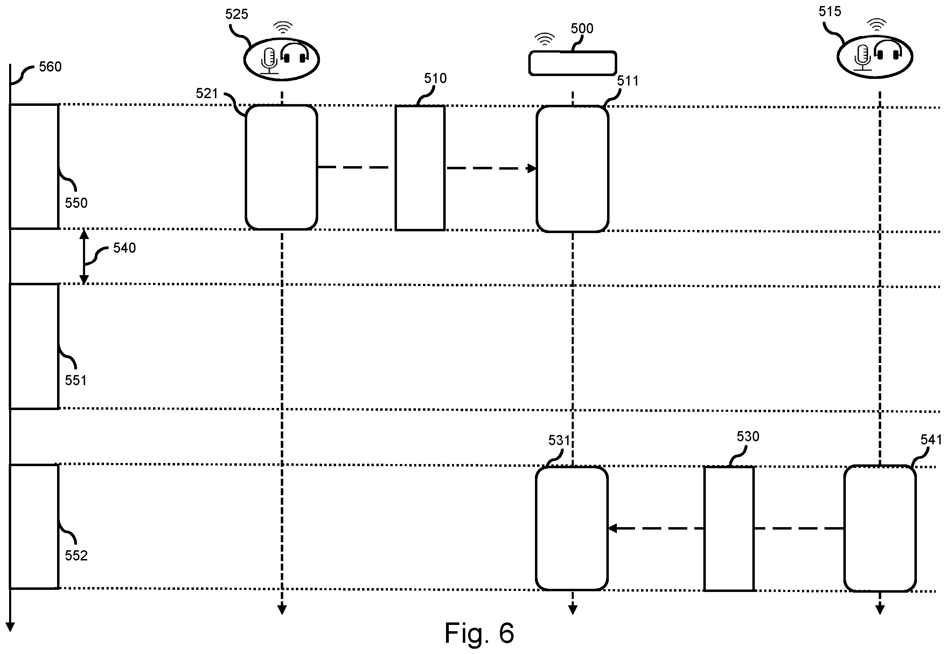

Figure 6 shows a time sequence diagram according to time axis 560. The diagram further shows interaction between a device 525, central unit 500 and device 515 during the occurrence of three time slots 550, 551, 552 with an inter-slot time distance 540. Time slots 550-552 are allocated as request time slots by central unit 500.

During time slot 550, the device 525 broadcasts 521 a broadcast request 510 which is received 511 by the central unit 500. Device 525 and 515 may operate as both an audio source and audio sink. The central unit 500 is configured to listen during the time slot 550 and receives 511 the broadcast request 510 from the audio source 525. After receiving the request, the central unit 500 can delegate one or more time slots in subsequent time intervals for broadcasting to device 525. In time slot 551, the central unit 500 does not receive any broadcast requests. During time slot 552, the device 515 transmits 541 a broadcast request 530 to the central unit 500, e.g. by broadcasting the request 530 within the system 1. The device 515 thus acts as an audio source. According to example embodiments, any broadcasting requests received outside a request time slot can be disregarded by the central unit 500. Announcing of the request time slots can be done by the central unit 500 during any of the control time slots of the schedule.

Alternatively, the broadcast request can be received by the central unit 500 outside the time slots of the broadcasting time schedule. For example, between the time slots of the broadcasting time schedule, e.g. during the time distance 540 between time slots, or via another communication link outside of the audio system 1. According to example embodiments, an audio source can transmit a broadcast request to the central unit over a separate, dedicated link between the audio source and the central unit. This can be done as an alternative to requesting a time slot via the schedule, i.e. during request time slots. This results in a separation of the requesting and the broadcasting of audio streams. Thereby, more time slots of the time schedule are left available for the broadcasting by the central unit and/or audio sources.

Additionally, or alternatively to handling broadcasting requests, time slots 550, 551, 552 can be used for handling release requests. In this case, time slots 550-552 are also control time slots. The broadcast request 510 in Figure 6 can for example represent a release request 510 broadcasted 521 by the device 525 to the central unit 500. The receiving 511 then represents the receiving of the release request 510. Analogously, broadcasting 541 by the device 515 in Figure 6 can represent the broadcasting 541 of a release request 530, upon which the central unit 500 receives 531 the request 530. After receiving release request 510, the central unit 500 can reallocate a time slot reserved for broadcasting by device 525 to another purpose. After receiving release request 530, the central unit 500 can reallocate a time slot reserved for broadcasting by device 515 to another purpose.

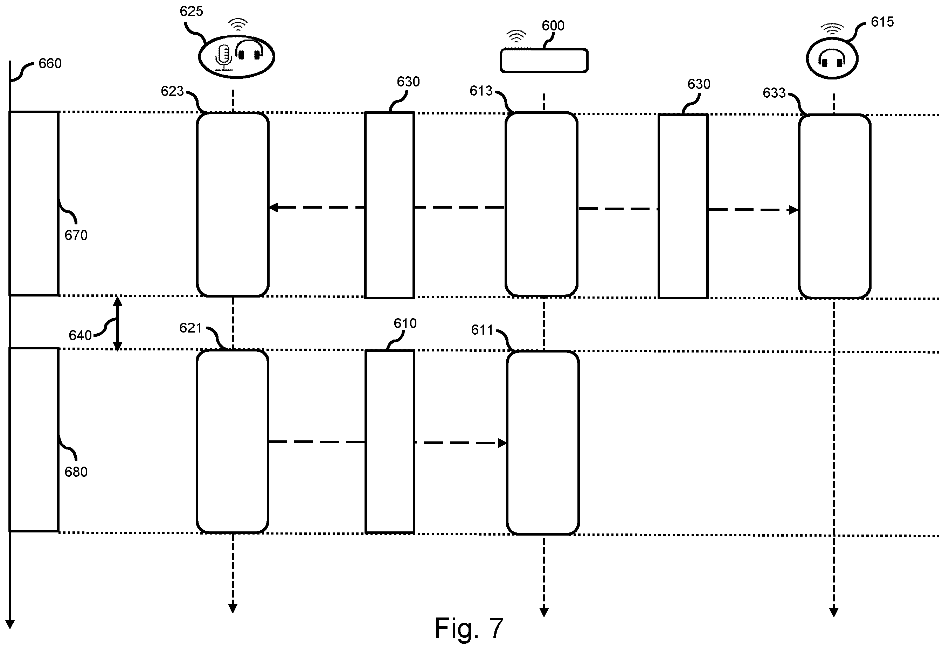

Figure 7 shows a time sequence diagram with time axis 660. Devices 615, 625 and central unit 600 are shown. Time slots 670, 680 of a time schedule and an inter-slot distance 640 are shown on the time axis 660. Time slots 670, 680 are allocated as control time slots and time slot 670 is more particularly allocated as request announcement time slot. During time slot 670, the central unit 600 is configured to broadcast request announcement 630 for announcing the time slot 680 during which audio sources may transmit a broadcast request. For example, when using BLE, the central unit 600 broadcasts advertisement 630 on the primary channels during request time slot 670. Devices 615, 625 support active scanning and receive the message 630. Central unit 600 has allocated the time slot 680, subsequent to time slot 670, for receiving 611 broadcast request messages from devices. In time slot 680, the device 625 broadcasts 621 a broadcast request 610, e.g. a BLE scan request 610, to the central unit 600. Upon receiving the request 610, the central unit 600 can allocate a time slot in future time intervals of the schedule for broadcasting by the device 625. The central unit 600 responds to the broadcast request 610 in a further response time slot, not shown, to inform the audio source of the time slot(s) it may use. For example, this can be done by sending, by the central unit 600, a BLE scan response to the audio source 625. As such, a scan request and scan response of the active scanning mechanism provided by BLE can be used as broadcast request and corresponding confirmation respectively.

It is noted that the number of audio sources that can be accommodated in the system 1 is based on the length of the time intervals and the length of the time slots. This is a design choice and can be considered along with other parameters such as the number of control time slots provided in each time interval. For example, an increased number of control time slots may provide a more smoothly functioning audio system. A decreased number of control time slots may provide more audio sources to be allocated a broadcasting time slot. To further increase the number of possible audio sources, more central units can be added to the audio system 1.

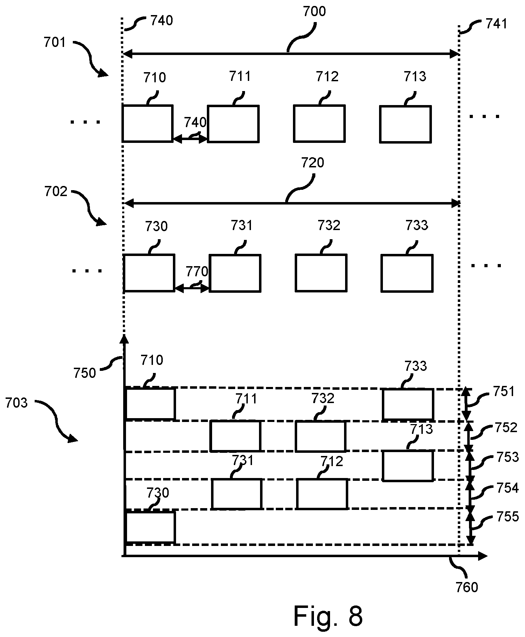

Figure 8 illustrates the use of a second central unit to scale up the wireless audio system 1 and allow additional handling of broadcasting by a second set of audio sources. Figure 8 shows a time schedule 701 of the central unit, e.g. central unit 100. The time schedule 701 comprises time slots 710, 711, 712, 713 with time distance 740 between the time slots. The central unit 100, 500, 600 may be referred to as the first central unit. Figure 8 shows a second time schedule 702 of the second central unit. The second set of audio sources is operated by the second central unit according to the second time schedule 702. Time schedule 702 comprises a second set of time slots 730, 731, 732, 733 with time distance 770 between the time slots. The time schedules 701, 702 and the corresponding time slots are synchronised.

The second central unit is configured to delegate, upon request of an audio source of the second set, the broadcasting in a subset of the second time slots to that audio source. The audio source of the second set will then broadcast a second audio source stream during this subset. For example, time slot 731 may be allocated by the second central unit to a particular audio source of the second set. Further, the second audio source stream is provided to the central unit, for example by the second central unit. The central unit can subsequently include the second audio source stream in the broadcasted audio streams, e.g. by mixing the second audio source stream into a stream broadcasted by the central unit.

As such, each of the central units is responsible for handling delegation of broadcasting within their own set of audio sources. In addition, the central units provide audio source streams originating from their audio sources to the other central units, thereby providing the stream to devices associated with the other central units.

The central units communicate with each other to pass on audio source streams and for control purposes. The communication may, for example, be via a network or via wired connections in case the central units are at the same location. The central units may be in a same room to service additional audio sources at a same location. Alternatively, the central units may each be on a different location to service audio sources at different geographical locations.

Frequency hopping mechanism 703 illustrates a case when the central units are at the same location. Frequency axis 750 allows defining frequency channels 751, 752, 753, 754, 755. Time axis 760 is shared by time schedule 701, second time schedule 702 and frequency channel scheme 703, to elucidate the synchronicity of the time schedules 701, 702 and the use of the frequency channels. Since broadcasting communication of the first and second time schedules 701, 702 can interfere, the channels may not overlap during a time slot. Temporally coinciding time slots, e.g. time slots 710 and 730, are therefore assigned different frequency channels, e.g. frequency channels 751 and 755 respectively.

Alternatively, the first and second central units can be located at a distance apart such that their broadcasting streams do not interfere. In this case, the synchronicity of the time schedules may advantageously be maintained for an efficient functioning of the system 1. The providing of non-overlapping channel selection is not necessary, since no interference can occur and channels may have different properties.

According to example embodiments, peripheral devices may comprise transmission circuitry operable to receive and broadcast according to the above described time schedule. Such circuitry may be BLE circuitry operable according to a BIG. For audio sources, such BLE circuitry may be specifically adapted to operate according to the above described delegation of audio streams. Such adaptation may be provided in the form of adapted software code that interacts with this BLE circuitry, or that runs on this BLE circuitry. This allows using existing hardware for both audio sinks and audio sources. As a result, backward compatibility with existing BLE firmware can be provided. In particular, no adaptations are necessary for audio sinks, and only limited software modifications are required for audio sources.

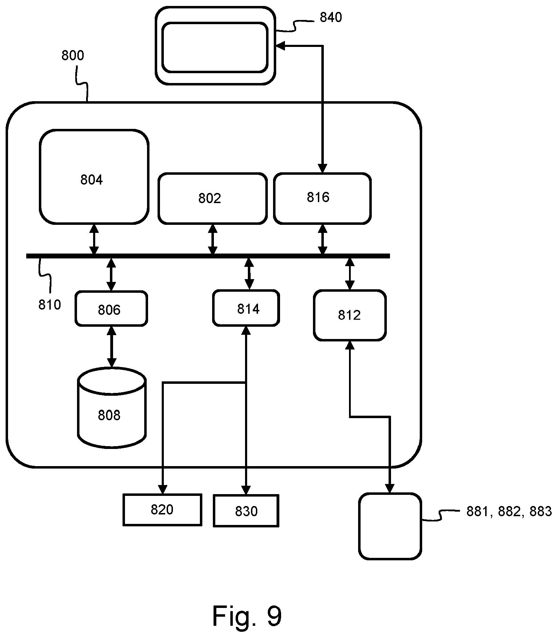

Figure 9 shows a suitable computing system 800 enabling to implement embodiments of the system 1, for example, an audio source, an audio sink and a central unit. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. For example, the conductors may comprise one or more wireless conductors. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, one or more microphones, a pen, voice recognition and/or biometric mechanisms, a camera, etc. Output interface 816 may comprise one or more conventional mechanisms that output information to the operator or user, such as a display 840, a loudspeaker etc. The communication interface 812 comprises a BLE interface. When the computing system 800 concerns a central unit, communication interface 812 may further comprise any transceiver-like mechanism such as for example one or more Ethernet interfaces that enables computing system 800 to communicate with other devices and/or systems, for example with other computing devices 881, 882, 883. In addition, the communication interface 812 of computing system 800 may be connected to such another computing system by means of a local area network (LAN) or a wide area network (WAN) such as for example the internet. Further, storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 800 could thus be configured to comprise program instructions stored thereon for performing the computer-implemented method according to the first example aspect.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and/or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for scheduling audio streams (120, 121, 122, 123, 124, 130, 131) within a wireless digital audio system (1) comprising a central unit (100), audio sinks (115, 116, 117, 125, 126, 127, 128, 129) and audio sources (125, 126, 127, 128, 129); wherein the central unit is configured to determine a broadcasting time schedule (101) for isochronous operation of the wireless digital audio system, wherein the broadcasting time schedule comprises consecutive time intervals (102, 103, 104); wherein a time interval comprises a set of time slots (110, 111, 112); the method comprising:
- broadcasting, by the central unit, one or more audio streams in one or more time slots of the set of time slots; and the method further being **characterised by** comprising:
- delegating, by the central unit, upon request of an audio source (125), the broadcasting in a subset (111) of the set of time slots to the audio source.

2. The method according to claim 1, further comprising broadcasting, by the audio source, an audio source stream (120) in the subset of time slots.

3. The method according to claim 2, further comprising mixing, by the central unit, the audio source stream into the one or more audio streams (130, 131) broadcasted by the central unit.

4. The method according to claim 2, further comprising announcing, by the central unit, the audio source stream to the audio sinks in the set of time slots.

5. The method according to any one of the preceding claims, wherein the set of time slots is assigned to frequency channels (351, 352, 353, 354, 355) according to a frequency hopping mechanism.

6. The method according to any one of the preceding claims, further comprising allocating, by the central unit, at least one time slot within the set as a control time slot (463-467) for managing the scheduling by the central unit.

7. The method according to any one of the preceding claims, further comprising receiving (511, 531), by the central unit (500), a broadcast request (510, 530) from the audio source (525, 515).

8. The method according to claim 6 and 7, further comprising allocating, by the central unit, one or more of the control time slots as request time slot for the receiving of broadcast requests (510, 530).

9. The method according to claim 7, wherein the broadcast request is received outside the time slots of the broadcasting time schedule.

10. The method according to claim 6, further comprising allocating, by the central unit, one or more of the control time slots as a request announcement time slot comprising an identification of one or more consecutive time slots as request time slot.

11. The method according to any one of the preceding claims, further comprising allocating, by the central unit, one or more response time slots (466) for confirming delegation of the subset of time slots to the audio source.

12. The method according to any one of the preceding claims, further comprising instructing, by the central unit, the audio source to cease the broadcasting.

13. The method according to any one of the preceding claims, further comprising receiving, by the central unit, a release request from the audio source to cease the broadcasting, and further comprising releasing, by the central unit, the subset based on the release request.

14. The method according to any one of the preceding claims, wherein the wireless digital audio system further comprises a second central unit and a second set of audio sources operable according to a second time schedule (702) having a second set of time slots (730, 731, 372, 733) synchronous with the set of time slots (710, 711, 712, 713); the method further comprising:
- delegating, by the second central unit, upon request of an audio source of the second set, the broadcasting in a subset of the second set of time slots to the audio source;
- broadcasting, by the audio source of the second set, a second audio source stream in the subset of the second set of time slots;
- providing the second audio source stream to the first central unit; and
- by the central unit, including the second audio source stream in the broadcasted one or more audio streams.

15. The method according to any one of the preceding claims, wherein the scheduling is performed according to a Bluetooth Low Energy, BLE, protocol by implementing a Broadcast Isochronous Group, BIG, wherein the central unit acts as central and wherein the audio sinks and audio sources act as peripheral.

## Patentansprüche

1. Computerimplementiertes Verfahren zum Planen von Audioströmen (120, 121, 122, 123, 124, 130, 131) innerhalb eines drahtlosen digitalen Audiosystems (1), das eine Zentraleinheit (100), Audiosenken (115, 116, 117, 125, 126, 127, 128, 129) und Audioquellen (125, 126, 127, 128, 129) umfasst; wobei die Zentraleinheit dazu konfiguriert ist, einen Sendezeitplan (101) für den isochronen Betrieb des drahtlosen digitalen Audiosystems zu bestimmen, wobei der Sendezeitplan aufeinanderfolgende Zeitintervalle (102, 103, 104) umfasst; wobei ein Zeitintervall einen Satz von Zeitfenstern (110, 111, 112) umfasst; wobei das Verfahren Folgendes umfasst:
- Senden, durch die Zentraleinheit, eines oder mehrerer Audioströme in einem oder mehreren Zeitfenstern des Satzes von Zeitfenstern; und wobei das Verfahren ferner **dadurch gekennzeichnet ist, dass** es Folgendes umfasst:
- Delegieren, durch die Zentraleinheit, auf Anforderung einer Audioquelle (125), des Sendens in einem Teilsatz (111) des Satzes von Zeitfenstern an die Audioquelle.

2. Verfahren nach Anspruch 1, ferner umfassend Senden eines Audioquellenstroms (120) in dem Teilsatz von Zeitfenstern durch die Audioquelle.

3. Verfahren nach Anspruch 2, ferner umfassend Mischen, durch die Zentraleinheit, des Audioquellenstroms in den einen oder die mehreren Audioströme (130, 131), die durch die Zentraleinheit gesendet werden.

4. Verfahren nach Anspruch 2, ferner umfassend Ankündigen des Audioquellenstroms für die Audiosenken in dem Satz von Zeitfenstern durch die Zentraleinheit.

5. Verfahren nach einem der vorhergehenden Ansprüche, wobei der Satz von Zeitfenstern Frequenzkanälen (351, 352, 353, 354, 355) gemäß einem Frequenzsprungmechanismus zugewiesen wird.

6. Verfahren nach einem der vorhergehenden Ansprüche, ferner umfassend Zuordnen, durch die Zentraleinheit, mindestens eines Zeitfensters innerhalb des Satzes als Steuerzeitfenster (463-467) zum Verwalten des Planens durch die Zentraleinheit.

7. Verfahren nach einem der vorhergehenden Ansprüche, ferner umfassend Empfangen (511, 531) einer Sendeanforderung (510, 530) von der Audioquelle (525, 515) durch die Zentraleinheit (500).

8. Verfahren nach Anspruch 6 und 7, ferner umfassend Zuordnen eines oder mehrerer der Steuerzeitfenster als Anforderungszeitfenster für das Empfangen von Sendeanforderungen (510, 530) durch die Zentraleinheit.

9. Verfahren nach Anspruch 7, wobei die Sendeanforderung außerhalb der Zeitfenster des Sendezeitplans empfangen wird.

10. Verfahren nach Anspruch 6, ferner umfassend Zuordnen eines oder mehrerer der Steuerzeitfenster als Anforderungsankündigungszeitfenster durch die Zentraleinheit, umfassend eine Identifizierung eines oder mehrerer aufeinanderfolgender Zeitfenster als Anforderungszeitfenster.

11. Verfahren nach einem der vorhergehenden Ansprüche, ferner umfassend Zuordnen eines oder mehrerer Antwortzeitfenster (466) durch die Zentraleinheit zum Bestätigen des Delegierens des Teilsatzes von Zeitfenstern an die Audioquelle.

12. Verfahren nach einem der vorhergehenden Ansprüche, ferner umfassend Anweisen der Audioquelle durch die Zentraleinheit, das Senden einzustellen.

13. Verfahren nach einem der vorhergehenden Ansprüche, ferner umfassend Empfangen einer Freigabeanforderung von der Audioquelle durch die Zentraleinheit, das Senden einzustellen, und ferner umfassend Freigeben des Teilsatzes basierend auf der Freigabeanforderung durch die Zentraleinheit.

14. Verfahren nach einem der vorhergehenden Ansprüche, wobei das drahtlose digitale Audiosystem ferner eine zweite Zentraleinheit und einen zweiten Satz von Audioquellen umfasst, die gemäß einem zweiten Zeitplan (702) betreibbar sind, der einen zweiten Satz von Zeitfenstern (730, 731, 372, 733) synchron mit dem Satz von Zeitfenstern (710, 711, 712, 713) aufweist; wobei das Verfahren ferner Folgendes umfasst:
- Delegieren, durch die zweite Zentraleinheit, auf Anforderung einer Audioquelle des zweiten Satzes, des Sendens in einem Teilsatz des zweiten Satzes von Zeitfenstern an die Audioquelle;
- Senden eines zweiten Audioquellenstroms in dem Teilsatz des zweiten Satzes von Zeitfenstern durch die Audioquelle des zweiten Satzes;
- Bereitstellen des zweiten Audioquellenstroms für die erste Zentraleinheit; und
- durch die Zentraleinheit, Einschließen des zweiten Audioquellenstroms in den einen oder die mehreren gesendeten Audioströme.

15. Verfahren nach einem der vorhergehenden Ansprüche, wobei das Planen gemäß einem Bluetooth-Low-Energy-Protokoll, BLE-Protokoll, durch Implementieren einer Broadcast Isochronous Group, BIG, durchgeführt wird, wobei die Zentraleinheit als Zentrale fungiert und wobei die Audiosenken und Audioquellen als Peripherie fungieren.

## Revendications

1. Procédé mis en œuvre par ordinateur pour programmer des flux audio (120, 121, 122, 123, 124, 130, 131) dans un système audio numérique sans fil (1) comprenant une unité centrale (100), des récepteurs audio (115, 116, 117, 125, 126, 127, 128, 129) et des sources audio (125, 126, 127, 128, 129) ; dans lequel l'unité centrale est configurée pour déterminer un programme temporel de diffusion (101) pour un fonctionnement isochrone du système audio numérique sans fil, dans lequel le programme temporel de diffusion comprend des intervalles temporels consécutifs (102, 103, 104) ; dans lequel un intervalle temporel comprend un ensemble de créneaux temporels (110, 111, 112) ; le procédé comprenant :
- la diffusion, par l'unité centrale, d'un ou de plusieurs flux audio dans un ou plusieurs créneaux temporels de l'ensemble des créneaux temporels ; et le procédé étant en outre **caractérisé en ce qu'**il comprend :
- la délégation, par l'unité centrale, sur demande d'une source audio (125), de la diffusion dans un sous-ensemble (111) de l'ensemble de créneaux temporels à la source audio.

2. Procédé selon la revendication 1, comprenant en outre la diffusion, par la source audio, d'un flux de source audio (120) dans le sous-ensemble de créneaux temporels.

3. Procédé selon la revendication 2, comprenant en outre le mélange, par l'unité centrale, du flux de source audio dans les un ou plusieurs flux audio (130, 131) diffusés par l'unité centrale.

4. Procédé selon la revendication 2, comprenant en outre l'annonce, par l'unité centrale, du flux de source audio aux récepteurs audio dans l'ensemble de créneaux temporels.

5. Procédé selon l'une quelconque des revendications précédentes, dans lequel l'ensemble de créneaux temporels est affecté à des canaux de fréquence (351, 352, 353, 354, 355) selon un mécanisme de saut de fréquence.

6. Procédé selon l'une quelconque des revendications précédentes, comprenant en outre l'attribution, par l'unité centrale, d'au moins un créneau temporel au sein de l'ensemble en tant que créneau temporel de commande (463-467) pour gérer la programmation par l'unité centrale.

7. Procédé selon l'une quelconque des revendications précédentes, comprenant en outre la réception (511, 531), par l'unité centrale (500), d'une demande de diffusion (510, 530) provenant de la source audio (525, 515).

8. Procédé selon la revendication 6 et 7, comprenant en outre l'attribution, par l'unité centrale, d'un ou de plusieurs des créneaux temporels de commande en tant que créneau temporel de demande pour la réception de demandes de diffusion (510, 530).

9. Procédé selon la revendication 7, dans lequel la demande de diffusion est reçue en dehors des créneaux temporels du programme temporel de diffusion.

10. Procédé selon la revendication 6, comprenant en outre l'attribution, par l'unité centrale, d'un ou de plusieurs des créneaux temporels de commande en tant que créneau temporel d'annonce de demande comprenant une identification d'un ou de plusieurs créneaux temporels consécutifs en tant que créneau temporel de demande.

11. Procédé selon l'une quelconque des revendications précédentes, comprenant en outre l'attribution, par l'unité centrale, d'un ou de plusieurs créneaux temporels de réponse (466) pour confirmer la délégation du sous-ensemble de créneaux temporels à la source audio.

12. Procédé selon l'une quelconque des revendications précédentes, comprenant en outre l'instruction, par l'unité centrale, à la source audio de cesser la diffusion.

13. Procédé selon l'une quelconque des revendications précédentes, comprenant en outre la réception, par l'unité centrale, d'une demande de libération provenant de la source audio pour cesser la diffusion, et comprenant en outre la libération, par l'unité centrale, du sous-ensemble sur la base de la demande de libération.

14. Procédé selon l'une quelconque des revendications précédentes, dans lequel le système audio numérique sans fil comprend en outre une seconde unité centrale et un second ensemble de sources audio pouvant fonctionner selon un second programme temporel (702) présentant un second ensemble de créneaux temporels (730, 731, 372, 733) synchrones avec l'ensemble de créneaux temporels (710, 711, 712, 713) ; le procédé comprenant en outre :
- la délégation, par la seconde unité centrale, sur demande d'une source audio du second ensemble, de la diffusion dans un sous-ensemble du second ensemble de créneaux temporels à la source audio ;
- la diffusion, par la source audio du second ensemble, d'un second flux de source audio dans le sous-ensemble du second ensemble de créneaux temporels ;
- la fourniture du second flux de source audio à la première unité centrale ; et
- par l'unité centrale, le fait de comprendre le second flux de source audio dans les un ou plusieurs flux audio diffusés.

15. Procédé selon l'une quelconque des revendications précédentes, dans lequel la programmation est réalisée selon un protocole de Bluetooth à basse consommation, BLE, en mettant en œuvre un groupe isochrone de diffusion, BIG, dans lequel l'unité centrale sert de centrale et dans lequel les récepteurs audio et les sources audio servent de périphériques.
